# EUROPEAN PATENT SPECIFICATION

(11) **EP 3 039 756 B1**
(45) Date of publication and mention of the grant of the patent: **07.06.2017**
(21) Application number: 14758704.2
(22) Date of filing: 13.08.2014
(51) Int. Cl.: H02B 1/30, H01H 71/06, H01R 9/26

(54) **MAINS DISTRIBUTION BOARD INCLUDING IDENTIFICATION LABEL**
NETZVERTEILERTAFEL MIT IDENTIFIKATIONSKENNZEICHNUNG
CARTE DE DISTRIBUTION DE RÉSEAU COMPRENANT UNE ÉTIQUETTE D'IDENTIFICATION

(30) Priority: 27.08.2013 NL 2011338
(43) Date of publication of application: 06.07.2016
(73) Proprietor: ABB B.V., 6716 AA Ede (NL)
(72) Inventor: RENCKENS, Thomas Philippus, NL-6716 AA Ede (NL)
(74) Representative: Marks, Frank
(86) International application number: PCT/NL2014/050560
(87) International publication number: WO 2015/030577

(56) References cited:
- EP-A1- 2 312 696
- EP-A2- 0 552 413
- DE-C1- 3 929 905
- DE-U- 1 676 137

## Description

### BACKGROUND OF THE INVENTION

The invention relates to a mains distribution board including identification label. A mains distribution board is part of the electric wiring of a building. An identification label having a unique number can be attached thereto so as to identify the mains distribution board. This particularly applies to extensive electric wirings for which extensive technical documentation needs to be built.

EP-A-2 312 696 discloses a mains distribution board with a support for an identification according to the preamble of claim 1.

It is an object of the invention to provide a mains distribution board including an identification label that is easy to place.

### SUMMARY OF THE INVENTION

The invention provides a mains distribution board for electric wirings comprising a rear side to be attached to a wall, a cover placed onto the rear side which cover has an opening, and units of switch material attached in a row at the rear side and extending through the opening at the front side, wherein the mains distribution board is furthermore provided with an identification label having a flat insertion plate placed adjacent to a unit of switch material in the row, characterized in that the insertion plate is provided with an identification section that stands out above the opening and which at the front side of the row stands out from said unit of switch material, wherein an identification has been placed on the identification section.

The identification for instance is a unique series of figures and/or letters or a barcode that has been placed on the identification label beforehand. With its insertion plate the identification label can be inserted next to a unit to provide it with the identification. It will therefore not be required to write on site of installation of the mains distribution board.

In one embodiment the identification section is located at the end of the insertion plate standing out from the switch material, resulting in the identification being clearly visible from the side.

In one embodiment the identification section stands out from the unit of switch material over a height that exceeds the height of the identification, so that the entire identification is freely visible from the side.

In one embodiment the units of switch material are provided with flat sides facing each other in the row, wherein the flat plate abuts the flat side of the unit of switch material.

In one embodiment the flat insertion plate is placed in between two immediately consecutive units of switch material. The flat insertion plate is then held properly upright.

In one embodiment an identification has been placed on the opposite sides of the identification section, in that way the identification label can be read from both sides of the row.

In one embodiment the rear side is provided with a rack having a rail onto which the units of switch material are attached, wherein the insertion plate engages onto the rail. The identification label can be arranged in the same manner as the units of switch material. This is an action familiar to the person assembling the mains distribution board.

In one embodiment thereof the rail has two attachment edges facing away from each other and extending parallel to each other, wherein the insertion plate is provided with two hooks facing each other and engaging behind the attachment edges. Said rail is a DIN rail for instance.

In one embodiment the identification label is provided with a front plate that is transverse to the insertion plate and that extends in front of the unit of switch material, wherein an identification has been placed on the front plate. The front plate is located in front of the unit of switch material as a result of which it is hard to put said unit into operation without first seeing the identification.

In one embodiment thereof the front plate is a flat front plate.

In one embodiment the insertion plate merges into the front plate via a predetermined break connection. The front plate can then easily, and entirely, be removed to put the unit of switch material into operation. The front plate can be removed for the administration of the electric wiring. The electrician may for instance write down the build number on the removed front plate shortly after the installation activities, which number will later on be linked in the administration to the mains distribution board in question having said unique identification.

In one embodiment the predetermined break connection is located in the corner of the insertion plate towards the front plate, as a result of which the front plate can be used as a lever to allow the predetermined break connection to give way.

In one embodiment the insertion plate and the front plate define an L-shape.

In one embodiment the identification on the front plate is the same as the identification on the identification section of the insertion plate.

In one embodiment the identification on the identification section of the insertion plate extends in the plane of the insertion plate fully above the unit of switch material, wherein the front plate extends in said direction above the identification on the identification section of the insertion plate and freely above the unit of switch material. Thus the identifications are properly visible and due to the distance between the front plate and the switch material the front plate can easily be taken hold of in order to be placed and in absence of the predetermined break connection breaking it off.

In other words, the units of switch material comprise a main plane situated in front of the opening, wherein the front plate extends spaced apart from the main plane above the main plane, wherein the distance between the main plane and the rear side of the front plate facing the main plane exceeds the height of the identification on the identification section of the insertion plate in that height direction.

In one embodiment, behind the cover the insertion plate is wider than the opening in the cover, as a result of which it comprises one or more shoulders for abutting the rear side of the cover along the edge of the opening in the cover.

In one embodiment the identification label is made of synthetic material.

The invention furthermore provides an identification label intended and suitable for the mains distribution board according to the invention.

The aspects and measures described in this description and the claims of the application and/or shown in the drawings of this application may where possible also be used individually. Said individual aspects may be the subject of divisional patent applications relating thereto. This particularly applies to the measures and aspects that are described per se in the sub claims.

### SHORT DESCRIPTION OF THE DRAWINGS

The invention will be elucidated on the basis of a number of exemplary embodiments shown in the attached drawings, in which:
Figure 1 shows an isometric view of a mains distribution board including identification label according to the invention;
Figure 2 shows the mains distribution board according to figure 1, wherein the front plate of the identification label has been removed; and
Figure 3 shows the mains distribution board according to figure 1, of which the cover and a part of the switch material has be removed to show the attachment of the identification label.

### DETAILED DESCRIPTION OF THE DRAWINGS

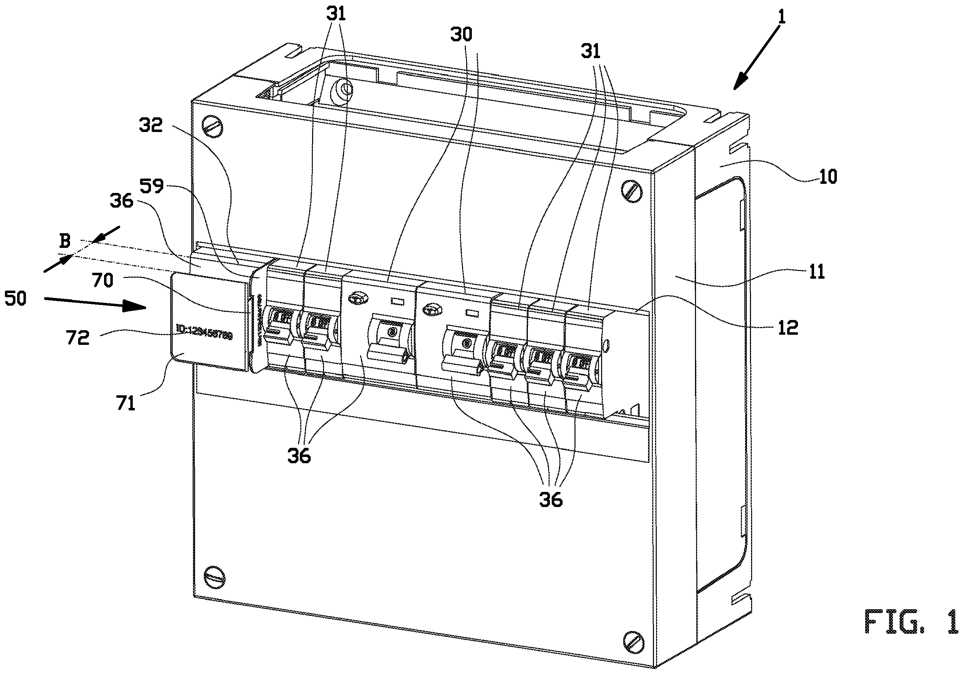

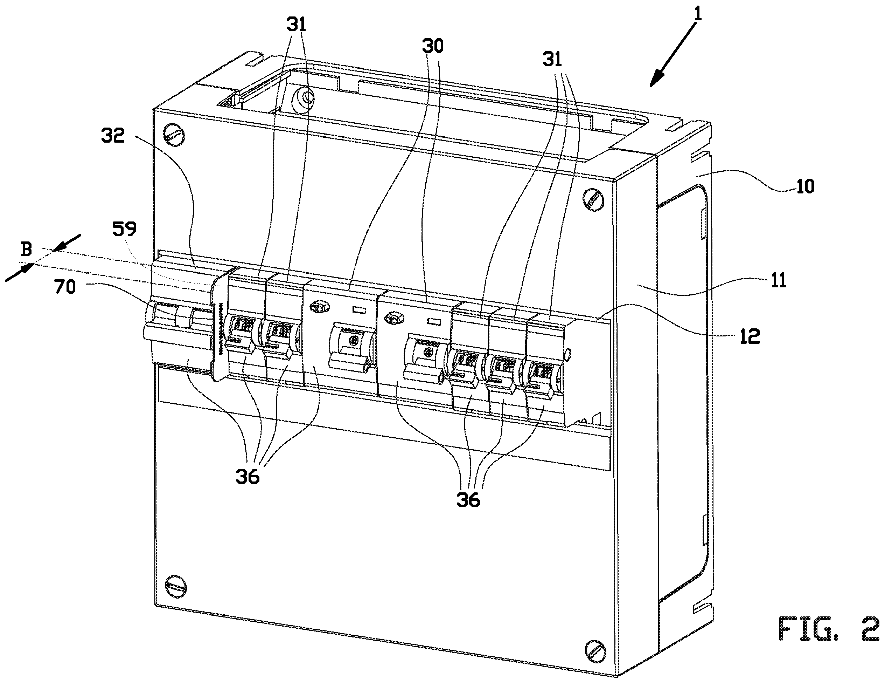

Figures 1 and 2 show a mains distribution board 1 according to the invention. The mains distribution board 1 forms a part of the electric wiring of a building. The mains distribution board 1 can be attached to a wall of the building. The mains distribution board 1 comprises a rectangular frame or rear side 10 of synthetic material onto which a cover 11 of synthetic material has been placed. In the mains distribution board 1 units of switch material have been incorporated, in this example a row including main switch 32, several automatic circuit breakers 31 and two earth leak switches 30. With its front side the switch material projects through an elongated, rectangular opening 12 of the cover 11.

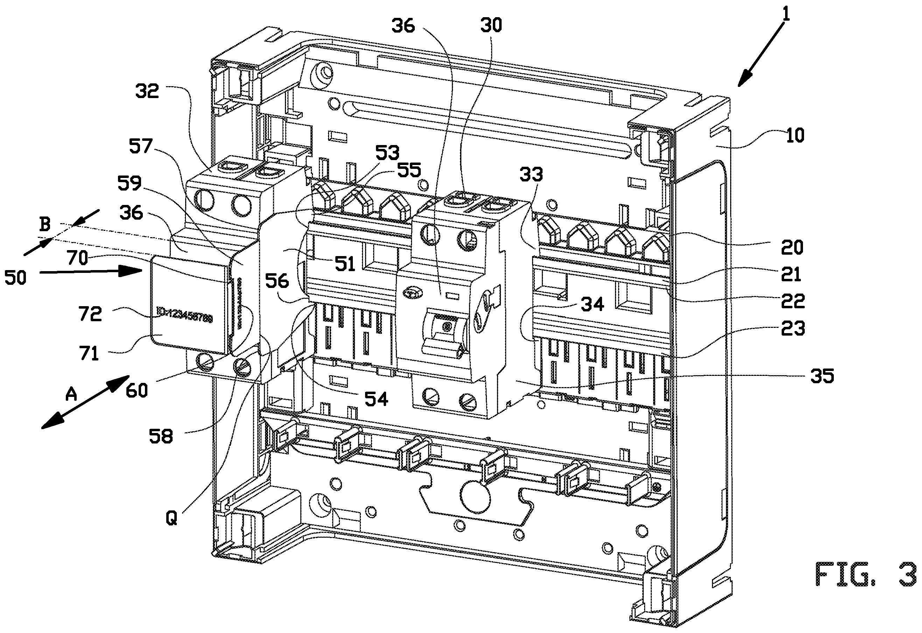

In figure 3 the cover 11 and a part of the earth leak switches 30 and the automatic circuit breakers 31 have been removed. The rear side 10 of the mains distribution board 1 is provided with a rack 20 of synthetic material, with positions for the automatic circuit breakers 31. At the front side the rack 20 is provided with a rail 21 with at the upper side an upwardly oriented attachment edge 22 and at the bottom side a downwardly oriented attachment edge 23. Said rail 21 is standardised and known as a DIN rail. As shown for the right hand side earth leak switch 30, at the rear side the switch material is provided with a downwardly oriented hook edge 33 and an upwardly oriented hook edge 34 that snap behind the attachment edges 22, 23 of the rail 21. The units of switch material 30, 31, 32 are provided with parallel side surfaces 35 facing each other in the row.

The mains distribution board 1 according to the invention is provided with a synthetic identification label 50 with which the mains distribution board 1 can be identified. In this example the identification label 50 has been placed adjacent to and at the front side over the main switch 32.

As shown in figure 3 the identification label 50 is provided with a straight flat insertion plate 51 which at the front side merges into a straight, flat front plate 71. At the bottom side the insertion plate 51 is provided with an upper stop 53 and a lower stop 56 for abutting the upwardly oriented attachment edge 22 and the downwardly oriented attachment edge 23, respectively, of the rail 21, and with an upper hook 53 and a lower hook 54 in order to engage behind it. The flexibility of the synthetic plate material allows the hooks 53, 54 to be elastically moved apart in order to permanently hook on afterwards. In the centre the insertion plate 51 is provided with two shoulders 57, 58 for abutting the inner side of the cover 11 directly behind the edge of the elongated opening 12.

At the front side the insertion plate 51 has been provided with identification section 59 standing out above the shoulders 57, 58 and standing out above the elongated opening 12 and the straight front surface or main plane 36 of the units of switch material 30, 31, 32. In figure 3 the identification section 59 that stands out is indicated by a notional broken line Q. The same registration number 60 has been placed on both sides of the identification section 59.

The front plate 71 merges into the insertion plate 51 via a predetermined break corner 70. The predetermined break corner 70 is formed by an elongated opening extending to closely before the outer ends of the predetermined break corner 70, wherein said residues of material will give way. At the sight side the front plate 71 has also been provided with a registration number 72 that is the same as the registration number 60 on the insertion plate 51.

With its insertion plate 51 the identification label 50 can be inserted in direction A between the units of switch material 30, 31, 32, for instance between the main switch 32 and the adjacent automatic circuit breaker 31. Contrary to the automatic circuit breakers 31 the main switch 32 has no fixed position on the rail 21 as a result of which it can slightly be shifted to make room for the insertion plate 51. With the hooks 53, 54 the insertion plate 51 finally engages onto the rail 21. Said position is secured by placing the cover 11 that will abut the shoulders 57, 58. In said placed condition the front plate 71 extends freely above the main plane 36 of the main switch 32. The distance B between the main plane 36 and the rear side of the front plate 71 facing said main plane 36, exceeds the height in said direction of the figures or letters of the registration number 60 on the insertion plate 51.

Placing the identification label 50 can take place during the pre-assembly of the mains distribution board 1 in the factory or when placing it in a building. After placing the mains distribution board the electrician can break off the front plate 71 along the predetermined break corner 70 for the administration of the laid installation wiring. The registration number 72 corresponds with the registration number 60 that is permanently left behind.

The above description is included to illustrate the operation of preferred embodiments of the invention and not to limit the scope of the invention. Starting from the above explanation many variations that fall within the scope of the present invention as claimed will be evident to an expert.

## Claims

1. Mains distribution board (1) for electric wirings comprising a rear side (10) to be attached to a wall, a cover (11) placed onto the rear side which cover has an opening (12), and units of switch material (30, 31) attached in a row at the rear side and extending through the opening at the front side, wherein the mains distribution board is furthermore provided with an identification label (50) having a flat insertion plate (51) placed adjacent to a unit of switch material in the row, **characterized in that** the insertion plate is provided with an identification section (59) that stands out above the opening (12) and which at the front side of the row stands out from said unit of switch material (30, 31), wherein an identification (60) has been placed on the identification section (59).

2. Mains distribution board (1) according to claim 1, wherein the identification section (59) is located at the end of the insertion plate (51) standing out from the switch material (30, 31).

3. Mains distribution board (1) according to claim 1 or 2, wherein the identification section (59) stands out from the unit of switch material (30, 31) over a height (B) that exceeds the height of the identification (60).

4. Mains distribution board (1) according to any one of the preceding claims, wherein the units of switch material (30, 31) are provided with flat sides (35) facing each other in the row, wherein the flat plate (51) abuts the flat side of the unit of switch material.

5. Mains distribution board (1) according to any one of the preceding claims, wherein the flat insertion plate (51) is placed in between two immediately consecutive units of switch material (30, 31).

6. Mains distribution board (1) according to any one of the preceding claims, wherein an identification (60) has been placed on the opposite sides of the identification section (59).

7. Mains distribution board (1) according to any one of the preceding claims, wherein the rear side (10) is provided with a rack (20) having a rail (21) onto which the units of switch material (30, 31) are attached, wherein the insertion plate (51) engages onto the rail, wherein the rail preferably has two attachment edges (23) facing away from each other and extending parallel to each other, wherein the insertion plate is provided with two hooks (33, 34) facing each other and engaging behind the attachment edges (23).

8. Mains distribution board (1) according to any one of the preceding claims, wherein the identification label (50) is provided with a front plate (71) that is transverse to the insertion plate (51) and that extends in front of the unit of switch material (30, 31), wherein an identification (72) has been placed on the front plate, wherein the front plate is preferably a flat front plate.

9. Mains distribution board (1) according to claim 8, wherein the insertion plate (51) merges into the front plate (71) via a predetermined break connection (70), wherein the predetermined break connection is preferably located in the corner of the insertion plate (51) towards the front plate (71).

10. Mains distribution board (1) according to any one of the claims 8 or 9, wherein the insertion plate (51) and the front plate (71) define an L-shape, and/or wherein the identification (72) on the front plate (71) is the same as the identification (60) on the identification section (59) of the insertion plate (51).

11. Mains distribution board (1) according to any one of the claims 8-10, wherein the identification (60) of the identification section (59) of the insertion plate (51) extends in the plane of the insertion plate fully above the unit of switch material (30, 31), wherein the front plate (71) extends in said direction above the identification (60) on the identification section (59) of the insertion plate (51) and freely above the unit of switch material (30, 31).

12. Mains distribution board (1) according to any one of the claims 8-11, wherein the units of switch material (30, 31) comprise a main plane (36) situated in front of the opening (12), wherein the front plate (71) extends spaced apart from the main plane above the main plane, wherein the distance (B) between the main plane (36) and the rear side of the front plate (71) facing the main plane exceeds the height of the identification (60) on the identification section (59) of the insertion plate (51) in that height direction.

13. Mains distribution board (1) according to any one of the preceding claims, wherein behind the cover (11) the insertion plate (51) is wider than the opening (12) in the cover, as a result of which it comprises one or more shoulders (57,58) for abutting the rear side of the cover along the edge of the opening in the cover.

14. Mains distribution board (1) according to any one of the preceding claims, wherein the identification label (50) is made of synthetic material.

15. Identification label (50) intended and suitable for the mains distribution board (1) according to any one of the preceding claims.

## Patentansprüche

1. Netzverteilerkasten (1) für elektrische Verdrahtungen, der eine Rückseite (10), die an eine Wand anzubringen ist, eine Abdeckung (11), die auf der Rückseite platziert ist, wobei die Abdeckung eine Öffnung (12) aufweist, und Schaltermaterialeinheiten (30, 31), die in einer Reihe an der Rückseite angebracht sind und sich an der Vorderseite durch die Öffnung erstrecken, umfasst, wobei der Netzverteilerkasten ferner mit einem Identifikationsschild (50) versehen ist, das eine flache Einsetzplatte (51) aufweist, die angrenzend an eine Schaltermaterialeinheit in der Reihe platziert ist, **dadurch gekennzeichnet, dass** die Einsetzplatte mit einem Identifikationsabschnitt (59) bereitgestellt ist, der oberhalb der Öffnung (12) hervorsteht und der an der Vorderseite der Reihe von der Schaltermaterialeinheit (30, 31) hervorsteht, wobei eine Identifikation (60) auf dem Identifikationsabschnitt (59) platziert wurde.

2. Netzverteilerkasten (1) nach Anspruch 1, wobei sich der Identifikationsabschnitt (59) an dem Ende der Einsetzplatte (51) befindet, die von dem Schaltermaterial (30, 31) hervorsteht.

3. Netzverteilerkasten (1) nach Anspruch 1 oder 2, wobei der Identifikationsabschnitt (59) von der Schaltermaterialeinheit (30, 31) um eine Höhe (B) hervorsteht, die die Höhe der Identifikation (60) überschreitet.

4. Netzverteilerkasten (1) nach einem der vorhergehenden Ansprüche, wobei die Schaltermaterialeinheiten (30, 31) mit flachen Seiten (35) versehen sind, die einander in der Reihe zugewandt sind, wobei die flache Platte (51) an die flache Seite der Schaltermaterialeinheit anliegt.

5. Netzverteilerkasten (1) nach einem der vorhergehenden Ansprüche, wobei die flache Einsetzplatte (51) zwischen zwei direkt aufeinanderfolgenden Schaltermaterialeinheiten (30, 31) platziert ist.

6. Netzverteilerkasten (1) nach einem der vorhergehenden Ansprüche, wobei eine Identifikation (60) auf den gegenüberliegenden Seiten des Identifikationsabschnitts (59) platziert wurde.

7. Netzverteilerkasten (1) nach einem der vorhergehenden Ansprüche, wobei die Rückseite (10) mit einem Rahmen (20), der eine Schiene (21) aufweist, an die die Schaltermaterialeinheiten (30, 31) angebracht sind, versehen ist, wobei die Einsetzplatte (51) an der Schiene einrastet, wobei die Schiene vorzugsweise zwei Befestigungskanten (23) aufweist, die voneinander abgewandt sind und sich parallel zueinander erstrecken, wobei die Einsetzplatte mit zwei Haken (33, 34) versehen ist, die einander zugewandt sind und die hinter den Befestigungskanten (23) einrasten.

8. Netzverteilerkasten (1) nach einem der vorhergehenden Ansprüche, wobei das Identifikationsschild (50) mit einer Vorderplatte (71) versehen ist, die zu der Einsetzplatte (51) quergerichtet ist und die sich vor der Schaltermaterialeinheit (30, 31) erstreckt, wobei eine Identifikation (72) auf der Vorderplatte platziert wurde, wobei die Vorderplatte vorzugsweise eine flache Vorderplatte ist.

9. Netzverteilerkasten (1) nach Anspruch 8, wobei die Einsetzplatte (51) mittels einer Sollbruchverbindung (70) in die Vorderplatte (71) übergeht, wobei sich die Sollbruchverbindung vorzugsweise in der Ecke der Einsetzplatte (51) zu der Vorderplatte (71) hin befindet.

10. Netzverteilerkasten (1) nach einem der Ansprüche 8 oder 9, wobei die Einsetzplatte (51) und die Vorderplatte (71) eine L-Form definieren und/oder wobei die Identifikation (72) auf der Vorderplatte (71) die gleiche wie die Identifikation (60) auf dem Identifikationsabschnitt (59) der Einsetzplatte (51) ist.

11. Netzverteilerkasten (1) nach einem der Ansprüche 8-10, wobei sich die Identifikation (60) des Identifikationsabschnitts (59) der Einsetzplatte (51) in der Ebene der Einsetzplatte erstreckt, die vollständig oberhalb der Schaltermaterialeinheit (30, 31) liegt, wobei sich die Vorderplatte (71) in der Richtung oberhalb der Identifikation (60) auf dem Identifikationsabschnitt (59) der Einsetzplatte (51) und frei oberhalb der Schaltermaterialeinheit (30, 31) erstreckt.

12. Netzverteilerkasten (1) nach einem der Ansprüche 8-11, wobei die Schaltermaterialeinheiten (30, 31) eine Hauptebene (36) umfassen, die sich vor der Öffnung (12) befindet, wobei sich die Vorderplatte (71) von der Hauptebene beabstandet oberhalb der Hauptebene erstreckt, wobei der Abstand (B) zwischen der Hauptebene (36) und der Rückseite der Vorderplatte (71), die der Hauptebene zugewandt ist, die Höhe der Identifikation (60) auf dem Identifikationsabschnitt (59) der Einsetzplatte (51) in dieser Höhenrichtung überschreitet.

13. Hauptverteilerkasten (1) nach einem der vorhergehenden Ansprüche, wobei die Einsetzplatte (51) hinter der Abdeckung (11) breiter als die Öffnung (12) in der Abdeckung ist, wobei sie als Ergebnis davon eine oder mehrere Schultern (57, 58) zum Anlegen der Rückseite der Abdeckung entlang der Kante der Öffnung in der Abdeckung umfasst.

14. Netzverteilerkasten (1) nach einem der vorhergehenden Ansprüche, wobei das Identifikationsschild (50) aus einem synthetischen Material gefertigt ist.

15. Identifikationsschild (50), das für den Netzverteilerkasten (1) nach einem der vorhergehenden Ansprüche beabsichtigt und geeignet ist.

## Revendications

1. Tableau de distribution de secteur (1) pour des câblages électriques comprenant un côté arrière (10) à fixer à un mur, un cache (11) placé sur le côté arrière lequel cache a une ouverture (12), et des unités de matériau de commutateur (30, 31) fixées dans une rangée du côté arrière et s'étendant à travers l'ouverture du côté avant, dans lequel le tableau de distribution de secteur est en outre pourvu d'une étiquette d'identification (50) ayant une plaque d'insertion plate (51) placée adjacente à une unité de matériau de commutateur dans la rangée, **caractérisé en ce que** la plaque d'insertion est pourvue d'une section d'identification (59) qui fait saillie au-dessus de l'ouverture (12) et qui, du côté avant de la rangée, fait saillie depuis ladite unité de matériau de commutateur (30, 31), dans lequel une identification (60) a été placée sur la section d'identification (59).

2. Tableau de distribution de secteur (1) selon la revendication 1, dans lequel la section d'identification (59) est située au niveau de l'extrémité de la plaque d'insertion (51) faisant saillie depuis le matériau de commutateur (30, 31).

3. Tableau de distribution de secteur (1) selon la revendication 1 ou 2, dans lequel la section d'identification (59) fait saillie depuis l'unité de matériau de commutateur (30, 31) sur une hauteur (B) qui dépasse la hauteur de l'identification (60).

4. Tableau de distribution de secteur (1) selon l'une quelconque des revendications précédentes, dans lequel les unités de matériau de commutateur (30, 31) sont pourvues de côtés plats (35) en regard l'un de l'autre dans la rangée, dans lequel la plaque plate (51) bute contre le côté plat de l'unité de matériau de commutateur.

5. Tableau de distribution de secteur (1) selon l'une quelconque des revendications précédentes, dans lequel la plaque d'insertion plate (51) est placée entre deux unités immédiatement consécutives de matériau de commutateur (30, 31).

6. Tableau de distribution de secteur (1) selon l'une quelconque des revendications précédentes, dans lequel une identification (60) a été placée sur les côtés opposés de la section d'identification (59).

7. Tableau de distribution de secteur (1) selon l'une quelconque des revendications précédentes, dans lequel le côté arrière (10) est pourvu d'une crémaillère (20) ayant un rail (21) sur lequel les unités de matériau de commutateur (30, 31) sont fixées, dans lequel la plaque d'insertion (51) s'enclenche sur le rail, dans lequel le rail a de préférence deux bords de fixation (23) orientés à distance l'un de l'autre et s'étendant parallèles l'un à l'autre, dans lequel la plaque d'insertion est pourvue de deux crochets (33, 34) en regard l'un de l'autre et s'enclenchant derrière les bords de fixation (23).

8. Tableau de distribution de secteur (1) selon l'une quelconque des revendications précédentes, dans lequel l'étiquette d'identification (50) est pourvue d'une plaque avant (71) qui est transversale à la plaque d'insertion (51) et qui s'étend devant l'unité de matériau de commutateur (30, 31), dans lequel une identification (72) a été placée sur la plaque avant, dans lequel la plaque avant est de préférence une plaque avant plate.

9. Tableau de distribution de secteur (1) selon la revendication 8, dans lequel la plaque d'insertion (51) se fond dans la plaque avant (71) via une connexion de rupture prédéterminée (70), dans lequel la connexion de rupture prédéterminée est de préférence située dans le coin de la plaque d'insertion (51) vers la plaque avant (71).

10. Tableau de distribution de secteur (1) selon l'une quelconque des revendications 8 ou 9, dans lequel la plaque d'insertion (51) et la plaque avant (71) définissent une forme de L, et/ou dans lequel l'identification (72) sur la plaque avant (71) est la même que l'identification (60) sur la section d'identification (59) de la plaque d'insertion (51).

11. Tableau de distribution de secteur (1) selon l'une quelconque des revendications 8 à 10, dans lequel l'identification (60) de la section d'identification (59) de la plaque d'insertion (51) s'étend dans le plan de la plaque d'insertion totalement au-dessus de l'unité de matériau de commutateur (30, 31), dans lequel la plaque avant (71) s'étend dans ladite direction au-dessus de l'identification (60) sur la section d'identification (59) de la plaque d'insertion (51) et librement au-dessus de l'unité de matériau de commutateur (30, 31).

12. Tableau de distribution de secteur (1) selon l'une quelconque des revendications 8 à 11, dans lequel les unités de matériau de commutateur (30, 31) comprennent un plan principal (36) situé devant l'ouverture (12), dans lequel la plaque avant (71) s'étend espacée du plan principal au-dessus du plan principal, dans lequel la distance (B) entre le plan principal (36) et le côté arrière de la plaque avant (71) en regard du plan principal dépasse la hauteur de l'identification (60) sur la section d'identification (59) de la plaque d'insertion (51) dans cette direction de hauteur.

13. Tableau de distribution de secteur (1) selon l'une quelconque des revendications précédentes, dans lequel, derrière le cache (11), la plaque d'insertion (51) est plus large que l'ouverture (12) dans le cache, en conséquence de quoi elle comprend un ou plusieurs épaulements (57, 58) pour buter contre le côté arrière du cache le long du bord de l'ouverture dans le cache.

14. Tableau de distribution de secteur (1) selon l'une quelconque des revendications précédentes, dans lequel l'étiquette d'identification (50) est réalisée en matériau synthétique.

15. Etiquette d'identification (50) destinée et convenant au tableau de distribution de secteur (1) selon l'une quelconque des revendications précédentes.
